(19) Europäisches Patentamt
European Patent Office
Office européen des brevets

(11) EP 2 295 522 B1

(12) FASCICULE DE BREVET EUROPEEN

(45) Date de publication et mention de la délivrance du brevet:
**05.08.2020 Bulletin 2020/32**

(21) Numéro de dépôt: **10175523.9**

(22) Date de dépôt: **07.09.2010**

(51) Int Cl.:
***C10G 45/02*** *(2006.01)* ***B01J 23/882*** *(2006.01)*
***B01J 31/02*** *(2006.01)* ***B01J 37/20*** *(2006.01)*
***B01J 37/12*** *(2006.01)* ***B01J 37/02*** *(2006.01)*

(54) **PROCEDE DE SULFURATION DE CATALYSEURS DE TRAITEMENT D'HYDROCARBURES.**

SCHWEFELUNGSVERFAHREN VON KATALYSATOREN ZUR AUFBEREITUNG VON KOHLENWASSERSTOFFEN

METHOD FOR SULPHIDATION OF HYDROCARBON PROCESSING CATALYSTS.

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **11.09.2009 FR 0956244**

(43) Date de publication de la demande:
**16.03.2011 Bulletin 2011/11**

(73) Titulaire: **Eurecat S.A.**
**07800 La Voulte-sur-Rhône (FR)**

(72) Inventeurs:
- **Dufresne, Pierre**
**26000, VALENCE (FR)**
- **Nagy, Eric**
**07800, CHARMES (FR)**
- **Galliou, Pauline**
**07360, DUNIERES SUR EYRIEUX (FR)**

(74) Mandataire: **Casalonga, Axel**
**Casalonga & Partners**
**Bayerstrasse 73**
**80335 München (DE)**

(56) Documents cités:
**EP-A1- 2 174 711**
**US-A- 5 017 535**
**US-A1- 2002 000 395**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un procédé de sulfuration de catalyseurs destinés au traitement d'hydrocarbures dans le domaine notamment du raffinage pétrolier et de la pétrochimie.

Les procédés de traitement des hydrocarbures effectués dans les raffineries et/ou les unités de pétrochimie incluent un certain nombre de traitements réalisés éventuellement en présence d'hydrogène, qui sont destinés à modifier la structure des molécules d'hydrocarbures et/ou à éliminer des coupes hydrocarbonées des composés indésirables tels que notamment les composés soufrés, azotés, aromatiques, métalliques. Peuvent être cités, à titre d'exemples non limitatifs, les procédés d'hydrocraquage ou d'hydroconversion, de réformage, d'isomérisation, d'alkylkation, d'hydrogénation, de déshydrogénation et les procédés dits d'hydrotraitement tels que les procédés d'hydrodésulfuration, d'hydrodéazotation, d'hydrodéaromatisation, d'hydrodémétallation, d'hydrodéoxygénation.

Ces procédés font appel à des catalyseurs spécifiques, qui comprennent un support poreux à base d'un ou plusieurs oxydes inorganiques réfractaires, sur lequel sont déposés un ou plusieurs métaux catalytiquement actifs. Ces métaux comprennent le plus souvent un ou plusieurs métaux du groupe VIII de la classification périodique des éléments, et/ou un ou plusieurs métaux du groupe VIB.

A l'issue de la fabrication du catalyseur, ou à l'issue de sa régénération dans le cas d'un catalyseur déjà utilisé, les métaux se présentent sous forme d'oxydes métalliques qui, en tant que tels, ne sont pas actifs.

Pour permettre aux catalyseurs d'être actifs dans les différents procédés de traitement d'hydrocarbures, il est nécessaire de procéder à une sulfuration du catalyseur, à savoir un traitement de celui-ci au moyen de composés soufrés, dans le but de transformer les oxydes métalliques en sulfures mixtes, qui constituent la phase active du catalyseur.

Cette étape de sulfuration est particulièrement importante, puisqu'elle conditionne l'activité du catalyseur dans son utilisation ultérieure.

De nombreux procédés de sulfuration ont été décrits dans l'état de la technique.

D'une manière générale, on distingue les procédés de sulfuration en phase liquide, dans lesquels le catalyseur est traité, en présence d'hydrogène, au moyen d'une phase liquide (généralement un hydrocarbure liquide tel qu'un gazole) comprenant des composés soufrés ; et les procédés de sulfuration en phase gazeuse, dans lesquels le catalyseur est traité par un mélange gazeux contenant du soufre (typiquement sous forme de sulfure d'hydrogène).

Ainsi, la demande de brevet EP 1 634 939 décrit un procédé de sulfuration effectué en phase gazeuse, au moyen d'un gaz contenant de l'hydrogène sulfuré ($H_2S$) et de l'hydrogène ($H_2$), avec un rapport molaire $H_2S$ / $H_2$ supérieur à 4 et une pression partielle d'$H_2S$ au moins égale à 1 kPa.

De nombreux moyens, destinés à améliorer les performances des procédés de sulfuration de catalyseurs, ont été décrits.

Ainsi, la demande de brevet EP 0 993 868, au nom de la Demanderesse, décrit un procédé de sulfuration d'un catalyseur d'hydroconversion d'hydrocarbures, en présence d'hydrogène et d'au moins un composé sulfuré. Ce procédé se caractérise en ce que le catalyseur est également mis au contact avec au moins un composé hydrocarboné.

La demande de brevet EP 1 077 085, également au nom de la Demanderesse, décrit un procédé de sulfuration qui se caractérise en ce que le catalyseur est également précarboné de manière à déposer dans ses pores un composé carboné en majeure partie non lixiviable.

Par ailleurs, la demande de brevet WO 01/76741 décrit un procédé de sulfuration d'un catalyseur contenant au moins un métal hydrogénant des groupes VI et/ou VIII et un additif organique, dans lequel le catalyseur est, dans un premier temps, mis en contact avec un liquide organique, puis, dans un second temps, mis en contact avec de l'hydrogène et un composé gazeux contenant du soufre, sous réserve que moins de 40% du soufre présent dans le catalyseur sulfuré ait été apporté par le liquide organique. US 5,017,535 divulgue un procédé de sulfuration.

Poursuivant ses recherches en matière de sulfuration de catalyseurs d'hydrotraitement, la Demanderesse a maintenant découvert qu'il était possible d'améliorer les procédés de sulfuration en phase gazeuse en déposant, préalablement à l'étape de sulfuration proprement dite, un auxiliaire de sulfuration particulier à la surface du catalyseur. Cette découverte est à la base de la présente invention.

Ainsi, la présente invention a pour objet un procédé de sulfuration d'un catalyseur de traitement d'hydrocarbures, tel que défini dans la revendication 1.

Sauf mention expresse contraire, on désigne par "groupement hydrocarboné", un groupement constitué uniquement d'atomes de carbone et d'hydrogène.

Ainsi, selon l'invention, les groupements $R_1$ (lorsqu'il s'agit d'un groupement hydrocarboné) et $R_3$ sont constitués uniquement d'atomes de carbone et d'hydrogène et ne contiennent pas d'hétéroatomes, tandis que le groupement $R_2$ peut en option contenir également des atomes d'oxygène et/ou d'azote.

Ainsi, selon l'invention, le ou les auxiliaire(s) de sulfuration de formule (I) comprennent un seul atome de soufre.

Le procédé de sulfuration selon l'invention permet de conférer au catalyseur un excellent niveau d'activité, supérieur à celui constaté avec certains procédés de l'art antérieur. En particulier, la Demanderesse a constaté que la

présence de l'auxiliaire de sulfuration de formule (I) à la surface du catalyseur sulfuré améliorait l'activité du catalyseur.

De plus, la Demanderesse a également constaté que l'auxiliaire de sulfuration de formule (I) facilitait la fixation du soufre sur le catalyseur. Notamment, l'étape de sulfuration proprement dite, par mise en contact du catalyseur avec le mélange gazeux soufré, peut être effectuée à une température moins élevée que ce qui est généralement pratiqué dans l'art antérieur.

Le procédé selon la présente invention comporte une première étape au cours de laquelle un ou plusieurs auxiliaire(s) de sulfuration de formule (I) est (sont) déposé(s) à la surface du catalyseur.

De préférence, dans la formule (I), $R_1$ désigne un atome d'hydrogène ou un groupement hydrocarboné linéaire ou ramifié, saturé ou insaturé, comprenant de 1 à 8 atomes de carbone, et de préférence de 1 à 4 atomes de carbone.

De manière également préférée, $R_2$ désigne un groupement hydrocarboné divalent linéaire ou ramifié, saturé ou insaturé, comprenant de 1 à 8 atomes de carbone, de préférence de 1 à 6 atomes de carbone, et pouvant être substitué par un ou plusieurs groupements -OH, -OR, $-NH_2$, -NHR, -NRR', avec R et R' désignant des groupements alkyle comprenant de 1 à 4 atomes de carbone et de préférence 1 ou 2 atomes de carbone.

De manière également préférée, $R_3$ désigne un groupement hydrocarboné linéaire ou ramifié, saturé ou insaturé, comprenant de 1 à 8 atomes de carbone, et de préférence de 1 à 4 atomes de carbone.

Selon un mode de réalisation préféré, dans la formule (I) :

- $R_1$ désigne un atome d'hydrogène ou un groupement alkyle comprenant 1 ou 2 atomes de carbone, et de préférence $R_1$ désigne un atome d'hydrogène ;
- $R_2$ désigne un groupement alkyle comprenant de 1 à 5 atomes de carbone pouvant être substitué par un ou plusieurs groupements - OH;
- $R_3$ désigne un groupement alkyle comprenant 1 ou 2 atomes de carbone, et de préférence $R_1$ désigne un groupe méthyle.

Selon un mode de réalisation particulièrement préféré de l'invention, l'auxiliaire de sulfuration de formule (I) est l'acide 2-hydroxy 4-méthylthiobutanoïque, c'est-à-dire que dans la formule (I) : $R_1$ désigne un atome d'hydrogène, $R_2$ désigne un groupement $-CHOH-CH_2-CH_2-$, et $R_3$ désigne un groupe méthyle.

Ce mode de réalisation est particulièrement avantageux dans la mesure où l'auxiliaire de sulfuration est facile à préparer et peu onéreux, puisque c'est un composé voisin de l'acide aminé méthionine, et qui peut être synthétisé par des voies analogues.

En outre, cet auxiliaire de sulfuration présente l'avantage supplémentaire d'être parfaitement soluble dans l'eau, ce qui permet son emploi sous forme de solution aqueuse.

L'auxiliaire de sulfuration de formule (I) est déposé à la surface du catalyseur par mise en contact du catalyseur avec cet auxiliaire. L'on peut procéder de plusieurs manières, par exemple en mettant le catalyseur en contact avec l'auxiliaire de sulfuration pur (notamment sous forme liquide ou gazeuse), ou avec une composition contenant l'auxiliaire de sulfuration au sein d'un fluide porteur qui peut être liquide, gazeux ou supercritique. De préférence, l'auxiliaire de sulfuration de formule (I) est déposé en mettant le catalyseur au contact d'une solution ou d'une suspension dudit auxiliaire dans un liquide porteur.

Ainsi, de manière particulièrement préférée, on procède par imprégnation du catalyseur au moyen d'une solution ou d'une dispersion de l'auxiliaire de sulfuration dans un liquide aqueux et/ou organique approprié.

Selon un mode de réalisation particulièrement avantageux de l'invention, le ou les auxiliaire(s) de sulfuration de formule (I) est (sont) déposé(s) sur le catalyseur par imprégnation avec une ou plusieurs solution(s) aqueuse(s) du (de ces) auxiliaire(s).

De préférence, la (les) solution(s) aqueuse(s) employée(s) ne comprend (comprennent) pas de co-solvant organique.

L'on peut procéder par imprégnation à sec du catalyseur (c'est-à-dire au moyen d'une solution dont le volume est inférieur ou égal au volume poreux du catalyseur), par imprégnation du catalyseur en présence d'un excès de solution, ou par trempage du catalyseur dans un excès de solution.

Cette mise en contact du catalyseur avec l'auxiliaire de sulfuration peut être instantanée ou durer jusqu'à 20 heures. De préférence, cette mise en contact dure environ 2 heures, de préférence environ 1 heure. Elle peut être réalisée à une pression allant de la pression atmosphérique à 5 bars, de préférence à pression atmosphérique, et être réalisée à une température préférentielle allant de la température ambiante à 100°C.

S'il reste du solvant, celui-ci est ensuite éliminé par exemple par chauffage de manière à le faire évaporer, ou par aspiration, ou par séchage au moyen d'un flux gazeux éventuellement en présence de chauffage. En tout état de cause, l'élimination du solvant résiduel le cas échéant doit être effectuée de manière à conserver l'intégralité, ou au moins une partie substantielle, de l'auxiliaire de sulfuration déposé à la surface du catalyseur, et éviter que celui-ci ne se décompose.

D'une manière générale, la première étape doit être réalisée dans des conditions permettant le dépôt à la

surface du catalyseur d'une quantité suffisante d'auxiliaire de sulfuration de formule (I), de manière à obtenir le gain d'activité recherché.

De préférence, à l'issue de la première étape, la quantité totale d'auxiliaire(s) de sulfuration de formule (I) déposé(s) à la surface du catalyseur, exprimée comme étant le ratio de la quantité molaire de composé(s) de formule (I) sur la quantité molaire totale de métaux catalytiquement actifs est d'au moins 0,01 moles de composé(s) de formule (I) par mole de métaux catalytiquement actifs. De préférence, cette quantité est comprise entre 0,01 et 10 moles de composé(s) de formule (I) par mole de métaux catalytiquement actifs, plus préférentiellement entre 0,05 et 5 moles et de manière encore plus préférée entre 0,1 et 1,5 moles.

Par exemple, lorsque le catalyseur comprend, comme métaux catalytiquement actifs, des métaux des groupes VIII et VIB, la quantité totale d'auxiliaire(s) de sulfuration de formule (I) déposé(s) à la surface du catalyseur à l'issue de la première étape est, de préférence, d'au moins 0,01 moles de composé(s) de formule (I) par mole de métaux des groupes VIII et VIB. De préférence, cette quantité est comprise entre 0,01 et 10 moles de composé(s) de formule (I) par mole de métaux des groupes VIII et VIB, plus préférentiellement entre 0,05 et 5 moles et de manière encore plus préférée entre 0,1 et 1,5 moles.

Le procédé selon la présente invention comprend également au moins une seconde étape, au cours de laquelle le catalyseur est mis en contact avec un mélange gazeux soufré, contenant de l'hydrogène et un composé sulfuré différent de l'auxiliaire de sulfuration de formule (I).

Avantageusement, le composé sulfuré est du sulfure d'hydrogène ($H_2S$), ou un composé susceptible de libérer du sulfure d'hydrogène par hydrogénolyse dans les conditions opératoires de la seconde étape. Parmi les composés utilisables à cet effet, citons par exemple le soufre élémentaire, le $CS_2$, les composés organiques soufrés différents de l'auxiliaire de sulfuration de formule (I), tels que les mercaptans, les sulfures, les disulfures, les polysulfures, les thiols, les thiophènes, les sulfoxydes.

Ce composé sulfuré peut être introduit conjointement avec l'hydrogène, ou déposé préalablement sur le catalyseur.

Ainsi, selon un premier mode de réalisation, le catalyseur est mis en contact simultanément avec l'hydrogène et le composé sulfuré, en mettant en contact le catalyseur avec un mélange gazeux préconstitué, contenant de l'hydrogène et le composé sulfuré.

De préférence, ce mélange gazeux contient de l'hydrogène et du sulfure d'hydrogène. L'on peut procéder, par exemple, de la manière décrite dans la demande de brevet EP 1 634 939.

Selon un second mode de réalisation, le catalyseur est, dans un premier temps, mis en contact avec le composé sulfuré, par exemple par dépôt de celui-ci à la surface du catalyseur, puis, dans un deuxième temps, le catalyseur est mis en contact avec un gaz contenant de l'hydrogène, dans des conditions telles que le composé sulfuré se décompose et donne naissance à du sulfure d'hydrogène. L'on obtient ainsi le mélange gazeux soufré.

Dans ce mode de réalisation, le composé sulfuré est de préférence choisi parmi le soufre élémentaire et les composés organiques soufrés, en particulier les mercaptans, les sulfures, les disulfures, les polysulfures, les sulfoxydes.

Le composé sulfuré peut être déposé sur le catalyseur tel quel, sous forme liquide ou gazeuse. Il peut également être déposé en solution ou en suspension au sein d'un fluide vecteur gazeux ou liquide. L'on peut ainsi procéder par imprégnation du catalyseur au moyen d'un solvant contenant ledit composé sulfuré, suivi d'un éventuel séchage destiné à évaporer le solvant. L'on peut procéder, par exemple, de la manière décrite dans la demande de brevet EP 0 707 890.

Le mode préféré de réalisation de la seconde étape est celui dans lequel le catalyseur est mis en contact avec un mélange gazeux soufré préconstitué, contenant de l'hydrogène et du sulfure d'hydrogène.

Quel que soit le mode particulier de réalisation de la seconde étape, la quantité de composé sulfuré employé est telle que le sulfure d'hydrogène représente de 5 à 70 % en volume du mélange sulfure d'hydrogène + hydrogène, de préférence de 10 à 60 % en volume.

Le mélange gazeux soufré peut, en plus de l'hydrogène et du composé sulfuré, comprendre également un ou plusieurs autres gaz, tels que notamment des gaz inertes de dilution, par exemple de l'azote. De tels gaz additionnels peuvent par exemple représenter de 5 à 80 % en volume dudit mélange gazeux.

Que le composé sulfuré soit introduit directement avec l'hydrogène, ou généré à partir d'un composé préalablement déposé sur le catalyseur, la mise en contact proprement dite du catalyseur avec le mélange gazeux soufré est effectuée à une température allant de 150 à 500°C, de préférence de 200 à 350°C.

De préférence, la température varie au cours du temps. Ainsi, l'on peut procéder en au moins deux étapes, une première étape de montée progressive en température, suivie d'une deuxième étape de palier à une température allant de 200 à 350°C.

Selon un mode de réalisation particulièrement préféré et avantageux de l'invention, la mise en contact proprement dite du catalyseur avec le mélange gazeux soufré est effectuée à une température inférieure à 300°C, et plus préférentiellement inférieure à 275°C.

En effet, grâce à la présence de l'auxiliaire de sulfuration de formule (I) à la surface du catalyseur, le traitement du catalyseur par le mélange gazeux soufré est plus efficace, et peut être effectué à une température moindre que celle

usuellement pratiquée dans l'art antérieur qui est généralement d'au moins 300°C.

La pression est généralement comprise entre la pression atmosphérique et 100 bars. De préférence, la mise en contact du catalyseur avec le mélange gazeux soufré est effectuée à pression atmosphérique.

Ladite deuxième étape peut être effectuée en lit fixe ou en lit mobile, par exemple en lit fluidisé ou bouillonnant, ou dans un four rotatif. Dans le cas d'un lit mobile, le mélange gazeux soufré peut circuler à co-courant ou à contre-courant du lit de catalyseur, de préférence à contre-courant.

La quantité de soufre incorporé dans le catalyseur lors de ladite seconde étape dépend de la quantité de métaux actifs présents à la surface de ce dernier. De préférence, la quantité de soufre incorporé représente de 50 à 200%, de préférence 80 à 120%, de manière plus préférée de 90 à 110% de la quantité stoechiométrique de soufre nécessaire pour que les métaux actifs se trouvent intégralement sous forme de sulfures métalliques.

Par exemple, dans le cas d'un catalyseur dont les métaux actifs sont le cobalt et le molybdène, les formes sulfures correspondant à une stoechiométrie de 100% peuvent être assimilées à respectivement CoS et $MoS_2$.

En outre, le procédé selon l'invention est de préférence réalisé dans des conditions telles que le catalyseur sulfuré obtenu au moyen dudit procédé contient au moins 1% en poids de carbone provenant de l'auxiliaire de sulfuration de formule (I), par rapport au poids total du catalyseur sous forme oxyde. De préférence, cette teneur est de au moins 1,5% en poids.

La mesure de la teneur en carbone provenant de l'auxiliaire de formule (I) peut être effectuée en mesurant la teneur en carbone du catalyseur sulfuré, en la corrigeant de la perte au feu à 500°C (mesure détaillée ci-après) pour l'exprimer par rapport au poids de catalyseur oxyde, et en retranchant de cette teneur l'éventuelle teneur en carbone du catalyseur initial avant traitement au moyen du procédé selon l'invention.

Dans le procédé selon la présente invention, ladite seconde étape est effectuée après la première étape. Elle peut être effectuée directement après la première étape, ou en être séparée par une ou plusieurs étape(s) intermédiaire(s).

Le procédé de sulfuration selon l'invention peut ainsi, outre les deux étapes décrites ci-avant, comprendre en option une ou plusieurs étapes additionnelles, qui peuvent être effectuées avant et/ou après lesdites première et seconde étapes, ou encore être intercalées entre ces deux étapes.

Ainsi, le procédé selon l'invention peut également comprendre, après ladite première étape, une étape de séchage du catalyseur, qui peut être effectuée à une température allant de 80°C à 350°C, de préférence de 100°C à 200°C, à l'air libre ou en présence d'un flux gazeux d'air, de gaz inerte tel que l'azote, ou de tout autre gaz approprié.

En outre, ladite seconde étape est en général suivie d'une étape de refroidissement, au cours de laquelle le catalyseur est ramené à température ambiante, ou à une température proche de la température ambiante. Ce refroidissement, généralement effectué progressivement, peut être réalisé en présence du mélange gazeux soufré, ou de tout autre gaz approprié, par exemple de l'hydrogène, un gaz inerte tel que l'azote, de l'oxygène, ou un mélange de tels gaz, ou de différents mélanges gazeux employés successivement.

Ainsi, l'on peut procéder à une première phase de refroidissement en mélange gazeux soufré, suivie d'une deuxième phase de refroidissement sous gaz inerte, par exemple de l'azote.

Selon un mode de réalisation préféré de l'invention, le procédé comprend en outre, après ladite seconde étape, une étape de passivation du catalyseur, qui est de préférence une passivation oxydante.

Cette passivation oxydante consiste à mettre en contact le catalyseur avec de l'oxygène ou un mélange gazeux contenant de l'oxygène. On emploie de préférence un mélange gazeux contenant moins de 30% d'oxygène. Ce mélange gazeux peut notamment être de l'air. Le contact du catalyseur avec le gaz contenant de l'oxygène peut se faire en plusieurs temps, avec augmentation progressive de la teneur en oxygène au cours du temps.

L'étape de passivation est de préférence effectuée à une température inférieure ou égale à 150°C, pour une durée généralement inférieure à 24 heures. Elle peut notamment être effectuée simultanément à l'étape de refroidissement du catalyseur effectuée à l'issue de la seconde étape.

Dans le cas d'un procédé de sulfuration effectué ex situ, la passivation présente notamment l'avantage de diminuer la tendance pyrophorique des phases sulfures présentes à la surface du catalyseur, et donc de permettre un transfert ou un stockage aisé de celui-ci, par exemple dans des fûts métalliques ou autre types de containers.

Le procédé de sulfuration selon l'invention peut également comprendre une étape de précarbonation, au cours de laquelle est déposé dans les pores du catalyseur un composé carboné en majeure partie non lixiviable, de la manière décrite dans la demande de brevet EP 1 077 085, ou un ou plusieurs composés hydrocarbonés, différents de l'auxiliaire de sulfuration de formule (I), de la manière décrite dans la demande de brevet EP 0 993 868.

Une telle étape peut alors être effectuée avant ladite première étape, simultanément à ladite première étape, entre la première et la seconde étape, ou simultanément à ladite seconde étape.

Toutefois, selon un mode de réalisation préféré de l'invention, le procédé de sulfuration ne comprend aucun dépôt, à la surface du catalyseur, de sources de carbone autres que l'auxiliaire de sulfuration de formule (I). En particulier, le procédé selon l'invention ne comprend de préférence aucun dépôt d'hydrocarbures autres que l'auxiliaire de sulfuration de formule (I).

Le procédé selon la présente invention permet de sulfurer tout catalyseur destiné au traitement d'hydrocarbures, dans les domaines du raffinage et de la pétrochimie.

Ces catalyseurs comprennent au moins un métal actif tel que notamment un métal hydrogénant, déposé sur un support à base d'un ou plusieurs oxydes minéraux réfractaires.

Par métal hydrogénant, on désigne un métal des groupes VIII et VIB de la classification périodique des éléments.

De préférence, les catalyseurs traités au moyen du procédé selon l'invention sont des catalyseurs contenant au moins un métal du groupe VIII de la classification périodique des éléments, tel que par exemple le cobalt, le nickel, le fer, le platine, le palladium, associé à au moins un métal du groupe VIB tel que par exemple le molybdène, le tungstène, le chrome. La teneur en métal ou métaux du groupe VIII est généralement comprise entre 0,1 et 10% en poids par rapport au poids total du catalyseur, et la teneur en métal ou métaux du groupe VIB est généralement comprise entre 1 et 20% en poids par rapport au poids total du catalyseur.

Le ou les métaux hydrogénant est (sont) déposé(s) sur un support à base d'un ou plusieurs oxydes minéraux réfractaires tels que notamment les alumines, les silices, les silice-alumines, les zéolithes, les zircones, les oxydes de titane et de bore, et les mélanges de tels oxydes.

Le procédé selon l'invention est particulièrement approprié à la sulfuration de catalyseurs contenant les associations métalliques CoMo, NiMo, NiW, NiCoMo, déposées sur des supports à base d'alumine.

Les catalyseurs traités au moyen du procédé selon l'invention peuvent, outre le ou les métaux hydrogénant, contenir tous ingrédients additionnels appropriés. Ils peuvent ainsi contenir par exemple, et de manière non limitative, un ou plusieurs composés halogénés, borés, phosphorés, un ou plusieurs éléments choisis parmi ceux des groupes IIIB, IVB, VB de la classification périodique des éléments.

Le procédé selon la présente invention convient tout particulièrement à la sulfuration de catalyseurs ne contenant aucun additif organique. Ainsi, il convient tout particulièrement à la sulfuration de catalyseurs pour lesquels la différence entre la perte au feu à 500°C et la perte au feu à 150°C est inférieure ou égale à 2% en poids, par rapport au poids du catalyseur initial.

De manière bien connue de l'homme du métier, l'expression « perte au feu » (ou LOI, de l'anglais « loss on ignition ») désigne la perte de masse résultant de l'échauffement d'un matériau, du fait du départ des matières volatiles.

Un catalyseur contenant des matières organiques telles qu'un additif organique présente une perte au feu significative à 500°C, résultant de la décomposition de ces matières organiques. En outre, du fait de leur grande surface spécifique et de leur caractère hygroscopique, les catalyseurs peuvent absorber une quantité non négligeable d'eau provenant entre autres de l'humidité de l'air, ce qui se caractérise par une perte au feu à 150°C pouvant aller de 5 à 10% en poids. Ainsi, pour déterminer si un catalyseur contient ou non un additif organique, il convient de considérer la différence entre la perte au feu à 500°C et la perte au feu à 150°C.

Les catalyseurs de traitement d'hydrocarbures se présentent généralement sous forme de particules solides de petite taille telles que des billes, des particules plus ou moins cylindriques, des extrudés. Ils présentent une surface spécifique, mesurée par la méthode BET, généralement comprise entre 100 et 300 $m^2/g$, un volume poreux, déterminé par adsorption d'azote, allant de 0,25 à 1 ml/g, et un diamètre de pores moyen, déterminé par adsorption d'azote, allant de 7 à 20 nm.

Le procédé selon l'invention convient pour la sulfuration tant de catalyseurs neufs, que de catalyseurs usés qui ont préalablement été régénérés.

Une fois traité au moyen du procédé selon la présente invention, le catalyseur est prêt à l'emploi, et peut être avantageusement employé directement dans le procédé de traitement d'hydrocarbures auquel il est destiné.

Il est également possible de procéder à un second traitement de sulfuration du catalyseur, effectué notamment in situ, immédiatement avant l'emploi du catalyseur. Il peut s'agir en particulier d'un traitement de sulfuration effectué en présence d'hydrogène par passage au travers du catalyseur d'une phase liquide contenant du soufre, typiquement une coupe d'hydrocarbures soufrée et/ou enrichie en hydrocarbures soufrés, telle que par exemple un distillat éventuellement additivé en diméthyldisulfure.

Ainsi, le procédé selon l'invention peut être employé comme procédé de pré-sulfuration, afin de préconditionner le catalyseur, de diminuer l'intensité et la durée du traitement de sulfuration finale effectué in situ, donc de gagner du temps, et d'augmenter l'efficacité du procédé de traitement d'hydrocarbures.

Les catalyseurs obtenus au moyen du procédé selon l'invention peuvent être employés dans tout procédé industriel mettant en œuvre un catalyseur soufré. Ils sont plus particulièrement destinés aux procédés de traitement des hydrocarbures tels que les coupes pétrolières, les hydrocarbures produits à partir du gaz naturel, du charbon, et les hydrocarbures d'origine végétale.

Citons, à titre d'exemples non limitatifs, les procédés d'hydrocraquage ou d'hydroconversion, de réformage, d'isomérisation d'alkylkation, d'hydrogénation, de déshydrogénation et les procédés dits d'hydrotraitement tels que les procédés d'hydrodésulfuration, d'hydrodéazotation, d'hydrodéaromatisation, d'hydrodémétallation, d'hydrodéoxygénation.

Le procédé selon la présente invention convient tout particulièrement à la sulfuration de catalyseurs destinés

aux procédés d'hydrotraitement de coupes pétrolières, et en particulier au procédé d'hydrodésulfuration.

Les exemples qui suivent sont donnés à titre purement illustratif de la présente invention.

EXEMPLES

Exemple 1 comparatif :

Cet exemple a été réalisé à partir d'un catalyseur conventionnel d'hydrotraitement C1, contenant 23,1% en poids de $MoO_3$ et 4,2% en poids de CoO supportés sur alumine gamma. Il contient moins de 0,1% en poids de carbone.

Ce catalyseur présente une différence entre la perte au feu mesurée à 500°C et la perte au feu mesurée à 150°C de 1,5% en poids.

La perte au feu a été évaluée comme suit: une masse initiale connue du catalyseur ($m_i$) est introduite dans un four à une température T donnée pendant 2h. Le catalyseur est alors sorti du four, placé dans un dessiccateur pour le refroidir sans qu'il reprenne d'humidité, puis pesé. On obtient alors la masse finale $m_f$. La perte au feu est ensuite calculée de la façon suivante :

$$\text{Perte au feu (à T°C)} = \frac{m_i - m_f}{m_i} * 100$$

Le tableau 1 ci-dessous résume les caractéristiques du catalyseur C1 de départ.

Tableau 1

| | |
|---|---|
| Teneur en $MoO_3$ (% poids) | 23,1 |
| Teneur en CoO (% poids) | 4,2 |
| Teneur en carbone (% poids) | <0,1 |
| Perte au feu à 500°C (% poids) | 3,5 |
| Perte au feu à 150°C (% poids) | 2 |
| Perte au feu à 500°C-Perte au feu à 150°C | 1,5 |

Ce catalyseur C1 a été sulfuré à pression atmosphérique par un mélange gazeux $H_2S/H_2$, avec une pression partielle d'$H_2S$ de 0,4 et une vitesse volumique horaire de gaz (VVH) de 300 $h^{-1}$. La rampe de température est de 5°C/min jusqu'à 320°C, avec un palier de 2h à cette température. L'échantillon sulfuré S1 a ainsi été obtenu. Les analyses effectuées sur le catalyseur sulfuré S1 ont permis d'obtenir les résultats suivants :

Tableau 2

| | |
|---|---|
| Perte au feu à 500°C (% poids) | 4,8 |
| Teneur en carbone rapportée au poids de | <0,1 |
| catalyseur oxyde (% poids) | |
| Teneur en soufre rapportée au poids de catalyseur oxyde (% poids) | 10,4 |
| Stoechiométrie S (%) | 86 |

La stoechiométrie est le rapport de la teneur en soufre mesurée (rapportée au poids de catalyseur oxyde) sur la teneur en soufre calculée, correspondant à une sulfuration complète des oxydes métalliques (en considérant que sont formées les formes sulfures CoS et $MoS_2$).

Exemple 2 comparatif:

Cet exemple a été réalisé à partir du même catalyseur conventionnel d'hydrotraitement C1, décrit dans l'exemple 1.

Ce catalyseur C1 a été sulfuré à pression atmosphérique par un mélange gazeux $H_2S/H_2$, avec une pression partielle d'$H_2S$ de 0,4 et une $VVH_{gaz}$ de 300 $h^{-1}$. La rampe de température est de 5°C/min jusqu'à 225°C, avec un palier

de 2h à cette température. L'échantillon sulfuré S2 a ainsi été obtenu.

Les analyses effectuées sur ce catalyseur sulfuré S2 ont permis d'obtenir les résultats suivants :

Tableau 3

| | |
|---|---|
| Perte au feu à 500°C (% poids) | 3,1 |
| Teneur en carbone rapportée au poids de catalyseur oxyde (% poids) | <0,1 |
| Teneur en soufre rapportée au poids de catalyseur oxyde (% poids) | 8,2 |
| Stoechiométrie S (%) | 68 |

Exemple 3 comparatif :

Cet exemple a été réalisé à partir du même catalyseur conventionnel d'hydrotraitement C1, décrit dans l'exemple 1.

100 g du catalyseur C1 ont été imprégnés avec 10g d'un hydrocarbure (huile minérale de base de type 150 Neutral, de masse volumique 0,87 g/cm$^3$ et de viscosité 121 mm$^2$/s) pour fournir le catalyseur A1.

Ce catalyseur A1 a été sulfuré à pression atmosphérique par un mélange gazeux $H_2S/H_2$, avec une pression partielle d'$H_2S$ de 0,4 et une $VVH_{gaz}$ de 300 h$^{-1}$. La rampe de température est de 5°C/min jusqu'à 225°C, avec un palier de 2h à cette température.

L'échantillon sulfuré S3 est a ainsi été obtenu. Les analyses effectuées sur le catalyseur sulfuré S3 ont permis d'obtenir les résultats suivants :

Tableau 4

| | |
|---|---|
| Perte au feu à 500°C (% poids) | 12,8 |
| Teneur en carbone rapportée au poids de catalyseur oxyde (% poids) | 8,3 |
| Teneur en soufre rapportée au poids de catalyseur oxyde (% poids) | 8,0 |
| Stoechiométrie S (%) | 66 |

Exemple 4 selon l'invention :

Cet exemple a été réalisé à partir du même catalyseur conventionnel d'hydrotraitement C1, décrit dans l'exemple 1.

100 g du catalyseur C1 ont été imprégnés à saturation du volume poreux à température ambiante par une solution obtenue par mélange de 14,2 g d'une solution commerciale à 88% en poids d'acide 2-hydroxy 4-méthylthiobutanoïque (soit 12,5g d'acide 2-hydroxy 4-méthylthiobutanoïque) et de 36 g d'eau déminéralisée. Après imprégnation, l'échantillon a été séché sous azote dans une étuve à 140°C, pour obtenir le catalyseur A2.

Ce catalyseur A2 a été sulfuré à pression atmosphérique par un mélange gazeux $H_2S/H_2$, avec une pression partielle d'$H_2S$ de 0,4 et une $VVH_{gaz}$ de 300 h$^{-1}$. La rampe de température est de 5°C/min jusqu'à 320°C, avec un palier de 2h à cette température. L'échantillon sulfuré S4 a ainsi été obtenu. Les analyses effectuées sur ce catalyseur sulfuré S4 ont permis d'obtenir les résultats suivants :

Tableau 5

| | |
|---|---|
| Perte au feu à 500°C (% poids) | 8,3 |
| Teneur en carbone rapportée au poids de catalyseur oxyde (% poids) | 2,7 |
| Teneur en soufre rapportée au poids de catalyseur oxyde (% poids) | 12.8 |
| Stoechiométrie S (%) | 106 |

Exemple 5 selon l'invention :

Le catalyseur A2 décrit dans l'exemple 4 a été sulfuré à pression atmosphérique par un mélange gazeux $H_2S/H_2$, avec une pression partielle d'$H_2S$ de 0,4 et une $VVH_{gaz}$ de 300 h$^{-1}$. La rampe de température est de 5°C/min jusqu'à 225°C, avec un palier de 2h à cette température.

L'échantillon sulfuré S5 a ainsi été obtenu. Les analyses effectuées sur ce catalyseur S5 ont permis d'obtenir les résultats suivants :

Tableau 6

| | |
|---|---|
| Perte au feu à 500°C (% poids) | 15,9 |
| Teneur en carbone rapportée au poids de catalyseur oxyde (% poids) | 4,9 |
| Teneur en soufre rapportée au poids de catalyseur oxyde (% poids) | 12.6 |
| Stoechiométrie S (%) | 104 |

Exemple 6 : Performances en hydrodésulfuration des catalyseurs des exemples 1 à 5 :

L'activité en hydrodésulfuration d'hydrocarbures de chaque catalyseur sulfuré S1, S2, S3, S4 et S5 a alors été évaluée, au moyen d'un test pilote.

La charge utilisée est un gazole "straight run", qui présente les caractéristiques suivantes :

| | |
|---|---|
| Teneur en soufre (ppm en poids) | 12200 |
| Teneur en azote (ppm en poids) | 94 |
| Densité (g/mL) | 0,837 |

Le volume de catalyseur employé pour le test était de 10mL.

Après une période de mouillage de 3 heures à température ambiante par le gazole, la montée en température est effectuée avec une rampe de 40°C/h jusqu'à la température de test, avec le gazole à une vitesse volumique horaire de $2h^{-1}$, avec un rapport $H_2$/gazole de 300 (NL/h)/(L/h) et une pression totale de 3MPa.

Les conditions de test sont ensuite les suivantes : pression de 3 MPa , rapport $H_2$/gazole de 300, VVH = $2h^{-1}$ ; le test a été réalisé, pour chaque échantillon, à une température d'unité de 340, 345 et 350°C.

La teneur en soufre de la charge est mesurée en sortie d'unité au moyen d'un analyseur par fluorescence UV. Les résultats obtenus figurent dans le Tableau 7 ci-après.

Tableau 7

| Catalyseur | Auxiliaire de sulfuration | Température de sulfuration (°C) | Teneur en S en sortie d'unité (en ppm) à 340°C à 345°C à 350°C | | |
|---|---|---|---|---|---|
| S1 | non | 320 | 154 | 78 | 38 |
| S2 | non | 225 | 265 | 151 | 70 |
| S3 | huile 150N | 225 | 238 | 133 | 62 |
| S4 | acide 2-hydroxy 4-méthylthiobutanoïque | 320 | 82 | 41 | 19 |
| S5 | acide 2-hydroxy 4-méthylthiobutanoïque | 225 | 90 | 45 | 22 |

Les résultats ci-avant démontrent que les catalyseurs S4 et S5, sulfurés au moyen du procédé selon l'invention, présentent une activité en hydrodésulfuration très nettement améliorée par rapport aux catalyseurs S1, S2 et S3 sulfurés au moyen de procédés selon l'art antérieur. Ce gain d'activité est observé y compris lorsque la température de la sulfuration proprement dite (traitement au moyen du mélange gazeux soufré) est abaissée substantiellement, de 320°C à 225°C.

Par ailleurs, les analyses effectuées sur les échantillons de catalyseurs démontrent que l'emploi de l'auxiliaire de sulfuration selon l'invention permet d'améliorer de manière substantielle la stoechiométrie de sulfuration des oxydes métalliques présents à la surface du catalyseur.

## Revendications

**1.** Procédé de sulfuration d'un catalyseur de traitement d'hydrocarbures, comprenant :

- au moins une première étape de dépôt, à la surface du catalyseur, d'un ou plusieurs auxiliaire(s) de sulfuration de formule (I) :

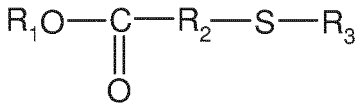

(I)

dans laquelle :

$R_1$ désigne un atome d'hydrogène ou un groupement hydrocarboné linéaire ou ramifié, saturé ou insaturé, comprenant de 1 à 30 atomes de carbone;
$R_2$ désigne un groupement hydrocarboné divalent linéaire ou ramifié, saturé ou insaturé, comprenant de 1 à 30 atomes de carbone, et pouvant en option contenir un ou plusieurs hétéroatome(s) choisi(s) parmi les atomes d'oxygène et d'azote;
$R_3$ désigne un groupement hydrocarboné linéaire ou ramifié, saturé ou insaturé, comprenant de 1 à 30 atomes de carbone; et

- au moins une seconde étape de mise en contact du catalyseur avec un mélange gazeux soufré contenant de l'hydrogène et un composé sulfuré différent de l'auxiliaire de sulfuration de formule (I), à une température comprise dans la gamme allant de 150 à 500°C.

**2.** Procédé selon la revendication précédente, **caractérisé en ce que** dans la formule (I), $R_1$ désigne un atome d'hydrogène ou un groupement hydrocarboné linéaire ou ramifié, saturé ou insaturé, comprenant de 1 à 8 atomes de carbone, et de préférence de 1 à 4 atomes de carbone.

**3.** Procédé selon l'une quelconque des revendications précédentes, **caractérisé en ce que** dans la formule (I), $R_2$ désigne un groupement hydrocarboné divalent linéaire ou ramifié, saturé ou insaturé, comprenant de 1 à 8 atomes de carbone, de préférence de 1 à 6 atomes de carbone, et pouvant être substitué par un ou plusieurs groupements -OH, -OR, $-NH_2$, -NHR, -NRR', avec R et R' désignant des groupements alkyle comprenant de 1 à 4 atomes de carbone et de préférence 1 ou 2 atomes de carbone.

**4.** Procédé selon l'une quelconque des revendications précédentes, **caractérisé en ce que** dans la formule (I), $R_3$ désigne un groupement hydrocarboné linéaire ou ramifié, saturé ou insaturé, comprenant de 1 à 8 atomes de carbone, et de préférence de 1 à 4 atomes de carbone.

**5.** Procédé selon l'une quelconque des revendications précédentes, **caractérisé en ce que** l'auxiliaire de sulfuration de formule (I) est l'acide 2-hydroxy 4-méthylthiobutanoïque.

**6.** Procédé selon l'une quelconque des revendications précédentes, **caractérisé en ce que** le ou les auxiliaire(s) de sulfuration de formule (I) est (sont) déposé(s) sur le catalyseur par imprégnation avec une ou plusieurs solution(s) aqueuse du (de ces) auxiliaire(s).

**7.** Procédé selon l'une quelconque des revendications précédentes, **caractérisé en ce que** le composé sulfuré employé au cours de la seconde étape est du sulfure d'hydrogène ($H_2S$), ou un composé susceptible de libérer du sulfure d'hydrogène par hydrogénolyse.

**8.** Procédé selon la revendication précédente, **caractérisé en ce que** le catalyseur est, dans un premier temps, mis en contact avec le composé sulfuré, par dépôt de celui-ci à la surface du catalyseur, puis, dans un deuxième temps, le catalyseur est mis en contact avec un gaz contenant de l'hydrogène, dans des conditions telles que le composé sulfuré se décompose et donne naissance à du sulfure d'hydrogène.

**9.** Procédé selon la revendication 7, **caractérisé en ce que** la seconde étape est effectuée par mise en contact du catalyseur avec un mélange gazeux soufré préconstitué, contenant de l'hydrogène et du sulfure d'hydrogène.

**10.** Procédé selon l'une quelconque des revendications précédentes, **caractérisé en ce que** la mise en contact du catalyseur avec le mélange gazeux soufré est effectuée à une température inférieure à 300°C, de préférence inférieure à 275°C.

**11.** Procédé selon l'une quelconque des revendications précédentes, **caractérisé en ce qu'**il est réalisé dans des conditions telles que le catalyseur sulfuré obtenu au moyen de ce procédé contient au moins 1%, et de préférence au moins 1,5 % en poids en poids de carbone provenant de l'auxiliaire de sulfuration de formule (I), par rapport au poids total du catalyseur sous forme oxyde.

**12.** Procédé selon l'une quelconque des revendications précédentes, **caractérisé en ce qu'**il comprend une ou plusieurs étapes additionnelles, effectuées avant et/ou après lesdites première et seconde étapes, ou intercalées entre ces deux étapes.

**13.** Procédé selon la revendication précédente, caractérisé en qu'il comprend en outre, après ladite seconde étape, une étape de passivation du catalyseur, qui est de préférence une passivation oxydante.

**14.** Procédé selon l'une quelconque des revendications précédentes, **caractérisé en ce qu'**il ne comprend aucun dépôt, à la surface du catalyseur, de sources de carbone autres que l'auxiliaire de sulfuration de formule (I).

**Patentansprüche**

**1.** Schwefelungsverfahren von einem Katalysator zur Aufbereitung von Kohlenwasserstoffen, umfassend:

- mindestens einen ersten Schritt des Abscheidens, an der Oberfläche des Katalysators, eines oder mehrerer Schwefelungs-Hilfsstoffe(s) der Formel (I):

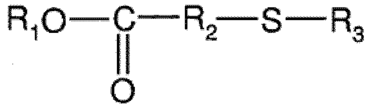

(I)

wobei:

$R_1$ ein Wasserstoffatom oder eine lineare oder verzweigte, gesättigte oder ungesättigte Kohlenwasserstoffgruppe bezeichnet, die von 1 bis 30 Kohlenstoffatome umfasst;
$R_2$ eine zweiwertige lineare oder verzweigte, gesättigte oder ungesättigte Kohlenwasserstoffgruppe bezeichnet, die von 1 bis 30 Kohlenstoffatome umfasst und optional ein oder mehrere Heteroatom(e) enthalten kann, die aus den Sauerstoff- und Stickstoffatomen ausgewählt sind;
$R_3$ eine lineare oder verzweigte, gesättigte oder ungesättigte Kohlenwasserstoffgruppe bezeichnet, die von 1 bis 30 Kohlenstoffatome umfasst; und

- mindestens einen zweiten Schritt des Kontaktierens des Katalysators mit einem gasförmigen Schwefelgemisch, das Wasserstoff und eine von dem Schwefelungs-Hilfsstoff der Formel (I) unterschiedliche Schwefelzusammensetzung enthält, bei einer Temperatur, die im Bereich von 150 bis 500 °C enthalten ist.

**2.** Verfahren nach dem vorstehenden Anspruch, **dadurch gekennzeichnet, dass** in der Formel (I) $R_1$ ein Wasserstoffatom oder eine lineare oder verzweigte, gesättigte oder ungesättigte Kohlenwasserstoffgruppe bezeichnet, die von 1 bis 8 Kohlenstoffatome, und vorzugsweise 1 bis 4 Kohlenstoffatome umfasst.

**3.** Verfahren nach einem der vorstehenden Ansprüche, **dadurch gekennzeichnet, dass** in der Formel (I) $R_2$ eine zweiwertige lineare oder verzweigte, gesättigte oder ungesättigte Kohlenwasserstoffgruppe bezeichnet, die von 1 bis 8 Kohlenstoffatome, vorzugsweise 1 bis 6 Kohlenstoffatome umfasst, und durch eine oder mehrere -OH, -OR, $-NH_2$, -NHR, -NRR' Gruppen substituiert werden kann, mit R und R', die Alkyl-Gruppen bezeichnen, die 1 bis 4 Kohlenstoffatome, und vorzugsweise 1 oder 2 Kohlenstoffatome umfassen.

**4.** Verfahren nach einem der vorstehenden Ansprüche, **dadurch gekennzeichnet, dass** in der Formel (I) $R_3$ eine

lineare oder verzweigte, gesättigte oder ungesättigte Kohlenwasserstoffgruppe bezeichnet, die von 1 bis 8 Kohlenstoffatome, und vorzugsweise 1 bis 4 Kohlenstoffatome umfasst.

**5.** Verfahren nach einem der vorstehenden Ansprüche, **dadurch gekennzeichnet, dass** der Schwefelungs-Hilfsstoff der Formel (I) 2-Hydroxy-4-Methylthiobuttersäure ist.

**6.** Verfahren nach einem der vorstehenden Ansprüche, **dadurch gekennzeichnet, dass** der (die) Schwefelungs-Hilfsstoff(e) der Formel (I) durch Imprägnieren mit einer oder mehreren wässrigen Lösung(en) dieses (dieser) Hilfsstoffe(s) auf dem Katalysator abgeschieden wird (werden).

**7.** Verfahren nach einem der vorstehenden Ansprüche, **dadurch gekennzeichnet, dass** die im Laufe des zweiten Schrittes angewendete Schwefelzusammensetzung Schwefelwasserstoff ($H_2S$) oder eine Zusammensetzung ist, die in der Lage ist, Schwefelwasserstoff durch Hydrogenolyse freizusetzen.

**8.** Verfahren nach dem vorstehenden Anspruch, **dadurch gekennzeichnet, dass** der Katalysator zuerst mit der Schwefelzusammensetzung, durch Abscheiden derselben an der Oberfläche des Katalysators, in Kontakt gebracht wird und dann, im Anschluss daran der Katalysator mit einem Gas, das Wasserstoff enthält, unter solchen Bedingungen in Kontakt gebracht wird, dass die Schwefelzusammensetzung zerfällt und Schwefelwasserstoff entstehen lässt.

**9.** Verfahren nach Anspruch 7, **dadurch gekennzeichnet, dass** der zweite Schritt durch In-Kontakt-Bringen des Katalysators mit einem vorab gebildeten gasförmigen Schwefelgemisch durchgeführt wird, das Wasserstoff und Schwefelwasserstoff enthält.

**10.** Verfahren nach einem der vorstehenden Ansprüche, **dadurch gekennzeichnet, dass** das In-Kontakt-Bringen des Katalysators mit dem gasförmigen Schwefelgemisch bei einer Temperatur von unter 300 °C, vorzugsweise unter 275 °C, durchgeführt wird.

**11.** Verfahren nach einem der vorstehenden Ansprüche, **dadurch gekennzeichnet, dass** es unter solchen Bedingungen realisiert wird, dass der anhand dieses Verfahrens erhaltene Schwefelkatalysator mindestens 1 Gew.-%, und vorzugsweise mindestens 1,5 Gew.-% an Kohlenstoffgewicht, das aus dem Schwefelungs-Hilfsstoff der Formel (I) stammt, in Bezug auf das Gesamtgewicht des Katalysators in Form von Oxid enthält.

**12.** Verfahren nach einem der vorstehenden Ansprüche, **dadurch gekennzeichnet, dass** es einen oder mehrere zusätzliche Schritte umfasst, die vor und/oder nach dem ersten und zweiten Schritt, oder zwischen diesen beiden Schritten eingeschoben, umfasst.

**13.** Verfahren nach dem vorstehenden Anspruch, **dadurch gekennzeichnet, dass** es weiter, nach dem zweiten Schritt, einen Passivierungsschritt des Katalysators umfasst, der vorzugsweise eine Sauerstoffpassivierung ist.

**14.** Verfahren nach einem der vorstehenden Ansprüche, **dadurch gekennzeichnet, dass** es keine Abscheidung, an der Oberfläche des Katalysators, von anderen Kohlenstoffquellen als dem Schwefelungs-Hilfsstoff der Formel (I) umfasst.

## Claims

**1.** A method for sulphidation of a hydrocarbon processing catalyst, comprising:

- at least one first step of depositing, on the surface of the catalyst, one or more sulphidation aid(s) of formula (I) :

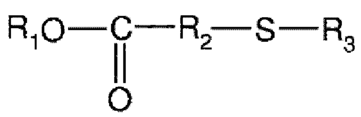

(I)

wherein:

$R_1$ represents a hydrogen atom or a linear or branched, saturated or unsaturated hydrocarbon group, comprising from 1 to 30 carbon atoms;
$R_2$ represents a divalent linear or branched, saturated or unsaturated hydrocarbon group, comprising from 1 to 30 carbon atoms, and which may optionally contain one or more heteroatom(s) selected from oxygen and nitrogen atoms;
$R_3$ represents a linear or branched, saturated or unsaturated hydrocarbon group, comprising from 1 to 30 carbon atoms; and

- at least one second step of contacting the catalyst with a sulphur gas mixture containing hydrogen and a sulphide compound different from the sulphidation aid of formula (I), at a temperature comprised within the range of 150 to 500°C.

**2.** The method according to the preceding claim, **characterised in that** in formula (I), $R_1$ represents a hydrogen atom or a linear or branched, saturated or unsaturated hydrocarbon group, comprising from 1 to 8 carbon atoms, and preferably from 1 to 4 carbon atoms.

**3.** The method according to any one of the preceding claims, **characterised in that** in formula (I), $R_2$ represents a divalent linear or branched, saturated or unsaturated hydrocarbon group, comprising from 1 to 8 carbon atoms, preferably from 1 to 6 carbon atoms, and which may be substituted by one or more groups -OH, -OR, $-NH_2$, -NHR, - NRR', with R and R' representing alkyl groups comprising from 1 to 4 carbon atoms and preferably 1 or 2 carbon atoms.

**4.** The method according to any one of the preceding claims, **characterised in that** in formula (I), $R_3$ represents a linear or branched, saturated or unsaturated hydrocarbon group comprising from 1 to 8 carbon atoms, and preferably from 1 to 4 carbon atoms.

**5.** The method according to any one of the preceding claims, **characterised in that** the sulphidation aid of formula (I) is 2-hydroxy-4-methylthiobutanoic acid.

**6.** The method according to any one of the preceding claims, **characterised in that** the sulphidation aid(s) of formula (I) is (are) deposited on the catalyst by impregnation with one or more aqueous solution (s) of the (of these) aid(s).

**7.** The method according to any one of the preceding claims, **characterised in that** the sulphide compound used during the second step is hydrogen sulphide ($H_2S$), or a compound capable of releasing hydrogen sulphide by hydrogenolysis.

**8.** The method according to the preceding claim, **characterised in that** the catalyst is, firstly, contacted with the sulphide compound, by depositing the latter on the catalyst surface, then, secondly, the catalyst is contacted with a hydrogen-containing gas, under conditions such that the sulphide compound decomposes and gives rise to hydrogen sulphide.

**9.** The method according to claim 7, **characterised in that** the second step is carried out by contacting the catalyst with a pre-constituted sulphur gas mixture, containing hydrogen and hydrogen sulphide.

**10.** The method according to any one of the preceding claims, **characterised in that** contacting the catalyst with the sulphur gas mixture is carried out at a temperature below 300°C, preferably below 275°C.

**11.** The method according to any one of the preceding claims, **characterised in that** it is carried out under conditions such that the sulphide catalyst obtained by means of this method contains at least 1%, and preferably at least 1.5% by weight of carbon from the sulphidation aid of formula (I), relative to the total weight of the catalyst in an oxide form.

**12.** The method according to any one of the preceding claims, **characterised in that** it comprises one or more additional steps, carried out before and/or after said first and second steps, or interposed between these two steps.

**13.** The method according to the preceding claim, **characterised in that** it further comprises, after said second step, a step of passivating the catalyst, which is preferably an oxidising passivation.

**14.** The method according to any one of the preceding claims, **characterised in that** it does not comprise any deposition,

on the surface of the catalyst, of carbon sources other than the sulphidation aid of formula (I).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1634939 A
- EP 0993868 A
- EP 1077085 A
- WO 0176741 A
- US 5017535 A
- EP 0707890 A